# EUROPEAN PATENT SPECIFICATION

(11) **EP 1 473 245 B1**
(45) Date of publication and mention of the grant of the patent: **28.03.2007**
(21) Application number: 03425265.0
(22) Date of filing: 30.04.2003
(51) Int. Cl.: B65D 65/18

(54) **A wrapped food product**
Eingewickeltes Lebensmittel
Produit alimentaire enveloppé

(43) Date of publication of application: 03.11.2004
(60) Divisional application: 06021201.6
(73) Proprietor: SOREMARTEC S.A., 6700 Schoppach-Arlon (BE); Ferrero S.p.A., 12051 Alba (Cuneo) (IT); FERRERO OFFENE HANDELSGESELLSCHAFT m.b.H., 35260 Stadtallendorf (DE)
(72) Inventor: Terrasi, Giuseppe, 12050 Benevello (Cuneo) (IT)
(74) Representative: Rambelli, Paolo

(56) References cited:
- CH-A- 271 278
- FR-A- 1 455 520
- GB-A- 442 301
- GB-A- 551 637
- GB-A- 1 011 649
- US-A- 1 640 052
- US-A- 1 815 261
- US-A- 1 949 161

## Description

The present invention relates to a wrapped food product comprising a confectionery product such as, in particular, a praline, wrapped in a wrapper made of sheet material.

The sheet material most commonly used for wrapping confectionery products such as pralines, chocolates and the like is generally constituted by an aluminium foil. The selection of an aluminium foil as wrapping material is considered preferable because it fits easily around the product so as to produce a wrapper that clings to the body of the product even when surface irregularities are present. When the shape of the confectionery product is perceived by the consumer as identifying and characterizing the product, the ability of the aluminium foil to follow the shape of the product closely helps to achieve a distinctive product result which, naturally, can be further enhanced with the use of specific colorations of the foil, or by applying a characterizing logo to the foil.

For confectionery products and particularly pralines, however, it is often desirable to adopt the solution of providing products which, although they have similar general shape characteristics which identify the producer's line or trade mark, have different organoleptic characteristics such as taste and flavour resulting from the presence of different ingredients. Within the context of this solution, it is desirable for the confectionery product to have on its surface a distinctive characteristic which can readily be related by the consumer to the organoleptic characteristics of the product. Thus, for example, a praline formed by a chocolate or wafer shell including a filling constituted by a fruit-based cream may be provided on its outer surface with a complete coating or, for example, with a coating that is limited to a top portion of the praline and is constituted by a frosting the colour of which identifies the fruit contained in the filling; alternatively, the praline may comprise a further distinctive element in its top region such as, for example, a dried fruit, a berry or a seed or nut of a type corresponding to the flavour and aroma of the filling.

Confectionary products wrapped in sheet having a non transparent portion adjacents a transparent portion allowing to see a portion of the surface of the product are described e.g. in GB 551 637 A, US-A-1 815 261, FR-A-1 455 520 and GB-A-1 011 649.

The present invention arises from the fact that conventional aluminium foil wrappers are not suitable for allowing the consumer to perceive the characteristics of the wrapped product.

The invention has therefore been developed with particular attention to the problem of providing a wrapped product the characteristics of which are readily perceptible by the consumer, even within a range comprising a plurality of wrapped products having generally similar shape characteristics.

The invention has also been developed in order to provide a wrapper suitable for enhancing the distinctive aesthetic characteristics of the wrapped confectionery product.

In view of these objects, a subject of the invention is a wrapped food product comprising a confectionery product wrapped in a wrapper made of sheet material as defined in the appended claims.

Specific embodiments of the wrapped product are illustrated in the appended drawings which are provided by way of nonlimiting example, and in which:
Figure 1 is a front elevational view of a wrapped product according to the invention,
Figure 2 is a partially-sectioned front view of an embodiment of the wrapped product,
Figure 3 is an exploded perspective view of a wrapping sheet used in the wrapper.

With reference to the drawings, a wrapped confectionery product, generally indicated 1, comprises a praline 2 and a wrapper 3 made of sheet material. In the embodiment shown, the praline has a body with a substantially flat, for example, circular base surface 4, a cup-shaped lower body portion 5, and a dome-shaped upper portion 6. However, the invention is not intended to be limited to a specific shape of the confectionery product which may, for example, adopt other shapes such as a spherical, substantially conical or frustoconical, pyramidal or frusto-pyramidal, chest or bar shape. Similarly, the term "praline" is intended to include other similar confectionery products such as, for example, chocolates.

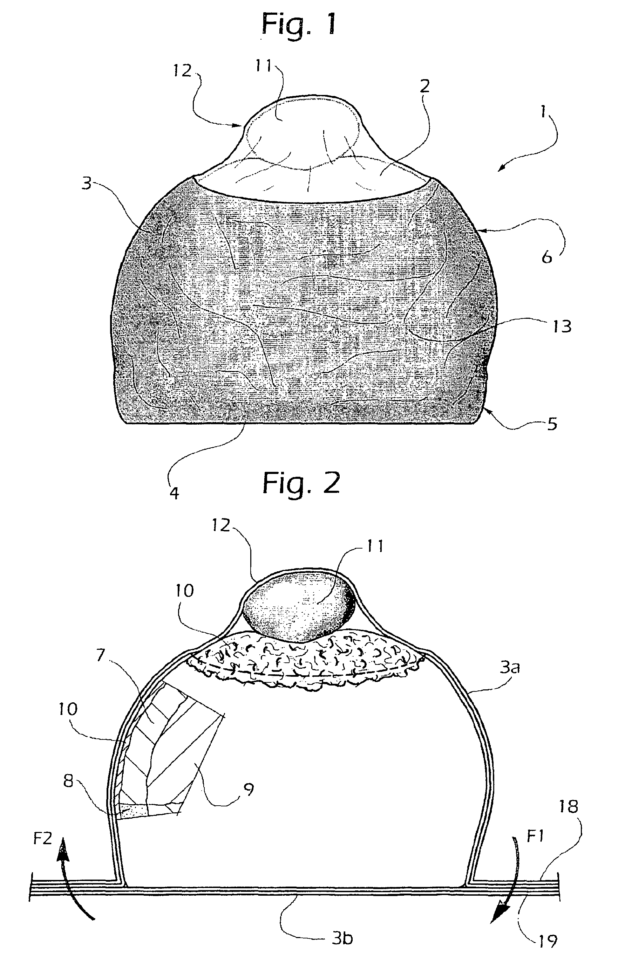

In a preferred embodiment, the product concerned is a praline formed by two half-shells 7, 8 (partially visible in the section of Figure 2) fitted together mouth to mouth and including a filling 9; the outer surface of the praline may have a partial or complete coating. In the preferred embodiment, the praline has, at least in its top region, a surface portion which can be perceived by the consumer as characterizing the organoleptic properties of the product. For example, this may be a coating or frosting 10 the appearance, for example the colour, of which can be associated directly with the taste or aroma of the product. For example, for a praline having a filling 9 constituted by a pistachio-flavoured cream, the outer surface of the praline may have a green-coloured frosting 10, at least in its top region. A further distinctive element 11, preferably also having the function of supplying flavour and constituted, for example, by a seed or nut, a berry, or a natural, dried or reconstituted fruit, is preferably associated with the body of the praline and arranged in an upper position (for example, in a recess) on the praline body. In the above-mentioned example, the distinctive element 11 may be, for example, a seed or nut, a berry or a dried fruit characterizing the flavour of the praline and also having decorative aesthetic characteristics.

The praline is wrapped in a wrapper 3 made of sheet material substantially clinging to the body of the praline and having a transparent portion 12 and a non-transparent portion 13. The transparent portion 12 is wrapped around the top portion of the praline so that a top surface portion 10 and the distinctive top element 11, when there is one, are rendered visible from the exterior.

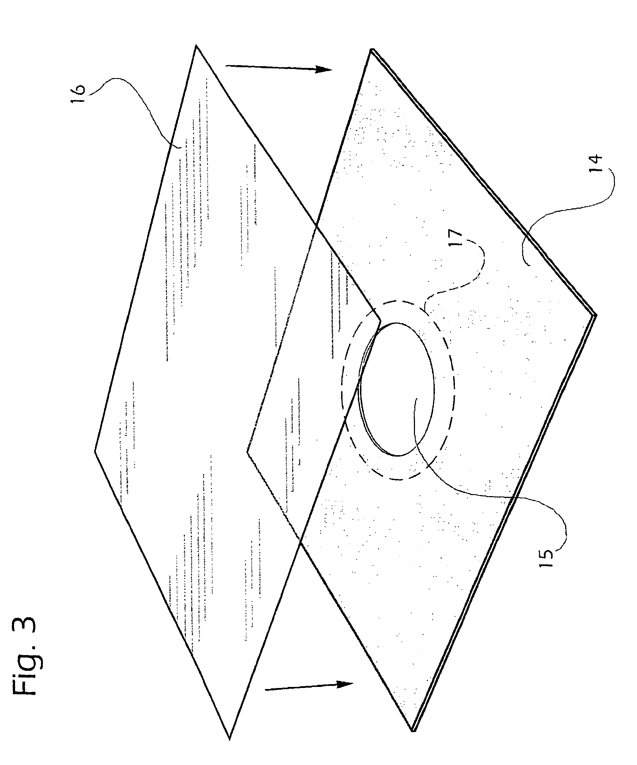

The wrapper 3 comprises a laminated sheet comprising a metal foil 14, preferably an aluminium foil, provided with a central opening 15 the shape of which may, of course, vary according to requirements, and a transparent film 16 which covers substantially the entire surface of the metal foil including the opening 15, the foil 14 and the film 16 being connected to one another by adhesion, optionally with the interposition of a thermally meltable lacquer in accordance with known techniques for the formation of laminates. Alternatively, the transparent film 16 may be shaped and connected to the metal foil 14 so as to cover the opening 16 and a limited annular region surrounding the opening, for example, the region indicated 17 in Figure 3 and delimited by a broken line in that drawing.

The wrapping sheet may have any suitable peripheral profile, a rectangular or square profile being preferred.

The transparent film may be made of transparent plastics material such as, for example, polyester, polypropylene, or polyamide. The term "transparent" as used in the present description also comprises materials more correctly definable as translucent, that is, materials which allow the observer to perceive visually the distinctive element or characterizing surface portion of the confectionery product.

The package may be produced with the use of a single wrapping sheet which is wrapped around the whole praline body with the end portions of the sheet turned over or fixed in another manner on the base 4 of the praline, for example, with an additional adhesive element.

However, in the preferred embodiment, the wrapper 3 is formed by two wrapping sheets 3a and 3b which together cover the entire praline body. In this solution, which is shown in Figure 2, the sheet 3a having the central transparent region 12 covers the side wall of the praline and the sheet 3b covers the base 4 of the praline and the sheets 3a, 3b are connected to one another in respective annular peripheral regions 18 and 19; the connection between the peripheral regions 18 and 19 of the two sheets may be rendered permanent by sealing, thus producing a hermetic or substantially hermetic wrapper.

In this embodiment, the sheets 3a and 3b are laminated sheets of the type described above. If the transparent plastics film forming the laminate is heat-sealable, the two sheets 3a and 3b are arranged in position wrapped around the food product with the surfaces of plastics material facing inwards and the connection in the peripheral regions 18 and 19 can be performed by heat-sealing.

It is, however, preferable to arrange the two sheets 3a and 3b with the metal (aluminium) foil facing inwards, and to perform the sealing of the peripheral regions 18 and 19 by gluing with the application of material or by heat-sealing performed by bringing about fusion (by the direct supply of heat or by applications of ultrasound waves) of a thermally meltable coating (a lacquer) provided on the metal foil.

Methods and devices suitable for producing a hermetic wrapper of the type shown in Figure 2 are described in EP-A-0 591 742 and EP-A-1 046 579.

As described in the above-mentioned documents, the peripheral regions 18 and 19 which are sealed against one another may be folded onto the base 4 of the praline body (in accordance with the arrow indicated F1) or may be turned towards the top portion of the praline body (in accordance with the arrow indicated F2) so as to form a cup-shaped or beaker-shaped body in which the peripheral edge surrounds the praline body at a distance, as described in EP-A-1 046 579.

The invention thus provides a wrapper for a food product which enhances the aesthetic and decorative characteristics of the product and which is attractive to the consumer, also enabling the consumer to make a choice between a plurality of products having generally similar shape characteristics.

The laminated wrapping sheet comprising an aluminium foil and a transparent film has the desired characteristics that it fits around the product and is easy to shape, combined with a substantially plastic behaviour so that the facility to cause the wrapping sheet to cling closely to the product is not impaired even if the product is of complex shape, and even when it is desirable to highlight the surface irregularities of the product by means of a corresponding irregularity of the surface of the wrapping sheet.

It is intended that the dimensions of the transparent portion of the wrapper may be reduced to the minimum necessary to achieve the desired effect of rendering visible and enhancing the characteristics of the confectionery product whilst retaining the desirable function typical of conventional aluminium wrappers of protecting the body of the product from light.

Naturally, the principle of the invention remaining the same, the details of construction and the forms of embodiment may be varied widely with respect to those described and illustrated, without thereby departing from the scope of the present invention as defined by the appended claims.

## Claims

1. A wrapped food product comprising a confectionery product (2) having a body with a supporting base (4), side walls (5) and a top region (10, 11), which is wrapped in a wrapper (3) made of sheet material, comprising at least one transparent portion (12) adjacent a non-transparent portion (13), wherein said transparent portion (12) allows to see a portion of the body surface from the exterior, **characterised in that** the wrapper (3) comprises at least one laminated sheet comprising a metal foil (14) provided with a central opening (15) and combined with a transparent film (16) which covers the opening (15) and at least an annular region (17) of the metal foil surrounding the opening or with a transparent film which covers the entire surface of the metal foil (14) including the opening (15), wherein said laminated sheet is wrapped around the body of the confectionery product with said non-transparent portion (12) wrapped around the side walls (5) and the base (4) of the body, with said opening (15) on the top region (10, 11), so as to render said top region visible from the exterior.

2. A wrapped confectionary product according to claim 1, **characterised in that** the confectionery product (2) comprises a praline (2) with a filling and including an additional distinctive element (11) positioned in the top region of the praline, wherein the distinctive element (11) is a seed, a nut, a berry, or a fruit.

3. A wrapped food product according to claim 1, **characterised in that** the confectionary product (2) is a praline having, at least in its top region, a coating (10) which is at least partially visible from the transparent wrapper portion (12).

4. A wrapped confectionery product according to any one of claims 1 to 3, **characterised in that** the wrapper (3) made of sheet material is formed by a single sheet which is wrapped around the entire body of the confectionary product.

5. A wrapped confectionery product according to claim 1, **characterised in that** the wrapper (3) made of sheet material comprises a first sheet (3a) and a second sheet (3b) connected to one another in respective peripheral regions (18, 19) that are sealed together.

6. A wrapped food product according to claim 5, **characterised in that** each of the first and second sheets (3a, 3b) is constituted by a laminate comprising a metal foil (14) combined with a transparent plastics film (16), the first and second sheets (3a, 3b) being arranged in position for wrapping the product with the metal foil facing towards the product, and the respective peripheral regions (18, 19) being sealed together by means of a thermally meltable glue or lacquer deposited on the metal surface.

## Patentansprüche

1. Eingewickeltes Lebensmittel, umfassend ein Süßwarenprodukt (2), das einen Körper mit einer stützenden Basis (4), Seitenwänden (5) und einer oberen Region (10, 11) hat, das in einem Einschlagmaterial (3) eingewickelt ist, welches aus Folienmaterial besteht, das wenigstens einen transparenten Teil (12) benachbart zu einem nicht-transparenten Teil (13) umfaßt, wobei der transparente Teil (12) einen Teil der Körperoberfläche von außen sehen läßt, **dadurch gekennzeichnet, daß** das Einschlagmaterial (3) wenigstens eine laminierte Folie umfaßt, die eine Metallfolie (14), die mit einer zentralen Öffnung (15) versehen ist und mit einem transparenten Film (16), der die Öffnung (15) und wenigstens eine ringförmige Region (17) der Metallfolie, die die Öffnung umgibt, bedeckt, oder mit einem transparenten Film, der die gesamte Oberfläche der Metallfolie (14) einschließlich der Öffnung (15) bedeckt, kombiniert ist, umfaßt, wobei die laminierte Folie um den Körper des Süßwarenprodukts gewickelt ist, wobei der nicht-transparente Teil (12) um die Seitenwände (5) und die Basis (4) des Körpers gewickelt ist, so daß die Öffnung (15) in der oberen Region (10, 11) die obere Region von außen sichtbar macht.

2. Eingewickeltes Süßwarenprodukt nach Anspruch 1, **dadurch gekennzeichnet, daß** das Süßwarenprodukt (2) eine Praline (2) mit einer Füllung und enthaltend ein zusätzliches charakteristisches Element (11), positioniert in der oberen Region der Praline, umfaßt, wobei das charakteristische Element (11) ein Samen, eine Nuß, eine Beere oder eine Frucht ist.

3. Eingewickeltes Lebensmittelprodukt nach Anspruch 1, **dadurch gekennzeichnet, daß** das Süßwarenprodukt (2) eine Praline ist, die wenigstens in ihrer oberen Region eine Beschichtung (10) hat, die durch den transparenten Einschlagmaterialteil (12) teilweise sichtbar ist.

4. Eingewickeltes Süßwarenprodukt nach einem der Ansprüche 1 bis 3, **dadurch gekennzeichnet, daß** das Einschlagmaterial (3), das aus einem Folienmaterial besteht, aus einer einzelnen Folie geformt ist, die um den ganzen Körper des Süßwarenprodukts gewickelt ist.

5. Eingewickeltes Süßwarenprodukt nach Anspruch 1, **dadurch gekennzeichnet, daß** das Einschlagmaterial (3), das aus Folienmaterial besteht, eine erste Folie (3a) und eine zweite Folie (3b), die in den jeweiligen peripheren Regionen (18, 19), die aneinander gesiegelt sind, verbunden sind.

6. Eingewickeltes Lebensmittelprodukt nach Anspruch 5, **dadurch gekennzeichnet, daß** jede, die erste und die zweite Folie (3a, 3b), aus einem Laminat besteht, das eine Metallfolie (14) kombiniert mit einem transparenten Kunststoffilm (16) umfaßt, wobei die erste und die zweite Folie (3a, 3b) in Position zum Einwickeln des Produkts mit der Metallfolie in Richtung zum Produkt angeordnet ist und die jeweiligen peripheren Regionen (18, 19) mit Hilfe eines thermisch schmelzbaren Leims oder Lacks, der auf der Metalloberfläche abgeschieden wurde, aneinander gesiegelt sind.

## Revendications

1. Produit alimentaire enveloppé comprenant un produit de confiserie (2) comportant un corps pourvu d'une base de support (4), de parois latérales (5) et d'une région supérieure (10, 11), qui est enveloppé dans une enveloppe (3) faite de matériau en feuille, comprenant au moins une portion transparente (12) adjacente à une portion non transparente (13), ladite portion transparente (12) permettant de voir une portion de la surface de corps depuis l'extérieur, **caractérisé en ce que** l'enveloppe (3) comprend au moins une feuille laminée comprenant une feuille métallique (14) pourvue d'une ouverture centrale (15) et combinée avec un film transparent (16) qui recouvre l'ouverture (15) et au moins une région annulaire (17) de la feuille métallique entourant l'ouverture ou avec un film transparent qui recouvre la totalité de la surface de la feuille métallique (14) incluant l'ouverture (15), ladite feuille laminée étant enveloppée autour du corps du produit de confiserie avec ladite portion non transparente (12) enveloppée autour des parois latérales (5) et de la base (4) du corps, avec ladite ouverture (15) sur la région supérieure (10, 11), afin de rendre ladite région supérieure visible depuis l'extérieur.

2. Produit de confiserie enveloppé selon la revendication 1, **caractérisé en ce que** le produit de confiserie (2) comprend une praline (2) comportant un fourrage et comprenant un élément distinctif supplémentaire (11) positionné dans la région supérieure de la praline, l'élément distinctif (11) étant une graine, un fruit sec à coque, une baie, ou un fruit.

3. Produit alimentaire enveloppé selon la revendication 1, **caractérisé en ce que** le produit de confiserie (2) est une praline comportant, au moins dans sa région supérieure, un enrobage (10) qui est, au moins en partie, visible depuis la portion d'enveloppe transparente (12).

4. Produit de confiserie enveloppé selon l'une quelconque des revendications 1 à 3, **caractérisé en ce que** l'enveloppe (3) faite de matériau en feuille est formée par une feuille unique qui est enveloppée autour de la totalité du corps du produit de confiserie.

5. Produit de confiserie enveloppé selon la revendication 1, **caractérisé en ce que** l'enveloppe (3) faite de matériau en feuille comprend une première feuille (3a) et une deuxième feuille (3b) reliées l'une à l'autre dans des régions périphériques respectives (18, 19) qui sont réunies par scellage.

6. Produit alimentaire enveloppé selon la revendication 5, **caractérisé en ce que** chacune des première et deuxième feuilles (3a, 3b) est constituée par un laminé comprenant une feuille métallique (14) combinée avec un film en plastique transparent (16), les première et deuxième feuilles (3a, 3b) étant agencées en position pour envelopper le produit avec la feuille métallique tournée vers le produit, et les régions périphériques respectives (18, 19) étant réunies par scellage au moyen d'une colle ou d'une laque fusible à chaud déposée sur la surface métallique.
